# EUROPÄISCHE PATENTSCHRIFT

(11) **EP 2 650 490 B1**
(45) Veröffentlichungstag und Bekanntmachung des Hinweises auf die Patenterteilung: **19.06.2019**
(21) Anmeldenummer: 13000710.7
(22) Anmeldetag: 11.02.2013
(51) Int. Cl.: F01D 17/16, F01D 9/04, F02C 9/20, F04D 29/56

(54) **Leitschaufelverstellvorrichtung einer Gasturbine**
Turbine vane adjustment device for a gas turbine
Dispositif de réglage d'aube directrice d'une turbine à gaz

(30) Priorität: 10.04.2012 DE 102012007129
(43) Veröffentlichungstag der Anmeldung: 16.10.2013
(73) Patentinhaber: Rolls-Royce Deutschland Ltd & Co KG, 15827 Blankenfelde-Mahlow (DE)
(72) Erfinder: Soehner, Dirk, 10119 Berlin (DE)
(74) Vertreter: Hoefer & Partner Patentanwälte mbB

(56) Entgegenhaltungen:
- FR-A1- 2 881 190
- JP-A- S4 845 912
- US-A- 3 458 118
- US-A- 3 779 665
- US-A1- 2011 176 913

## Beschreibung

Die Erfindung bezieht sich auf eine Leitschaufelverstellvorrichtung für einen Kompressor oder eine Turbine einer Gasturbine gemäß dem Oberbegriff des Anspruchs 1.

Im Einzelnen bezieht sich die Erfindung auf eine Leitschaufelverstellvorrichtung für einen Kompressor oder eine Turbine mit einer Vielzahl von jeweils um eine radiale Achse schwenkbaren Leitschaufeln, welche in zumindest zwei Radialebenen angeordnet sind. Die Leitschaufeln bilden somit jeweils eine scheibenförmige Anordnung, wobei zwischen den zumindest zwei Leitschaufelanordnungen und/oder in Strömungsrichtung stromauf und stromab Laufschaufeln angeordnet sind, so wie dies aus dem Stand der Technik bekannt ist.

Zur Verstellung der Leitschaufeln jeder scheibenförmigen Anordnung von Leitschaufeln ist ein Leitschaufelverstellring vorgesehen, welcher in Umfangsrichtung verdrehbar ist. Der Leitschaufelverstellring ist mit der jeweiligen Leitschaufel über einen Hebelmechanismus gekoppelt, so dass bei einer Verdrehung des Leitschaufelverstellrings die Leitschaufeln um ihre radialen Achsen verschwenkt werden. Der Leitschaufelverstellring ist mit einer geeigneten Betätigungsvorrichtung gekoppelt.

Derartige Anordnungen sind beispielsweise aus der EP 2 258 926 A2, der US 2009/0162192 A1 oder der US 2010/0278639 A1 vorbekannt.

Mittels der Betätigungsvorrichtung ist es somit möglich, den Anstellwinkel der jeweiligen Leitschaufel den Betriebsbedingungen des Kompressors oder der Turbine anzupassen. Dabei kann sich bei den aus dem Stand der Technik bekannten Vorrichtungen der Nachteil ergeben, dass, bedingt durch die Verstellkraft, welche durch die Betätigungsvorrichtung aufgebracht wird, der Leitschaufelverstellring nicht gleichmäßig verdreht wird, so dass sich für die einzelnen Leitschaufeln unterschiedliche Schwenkwinkel oder Verstellwinkel ergeben. Die Ursache liegt insbesondere in dem Auftreten von Tangentialkräften, welche bei einer Betätigung der Betätigungsvorrichtung auf den Leitschaufelverstellring wirken. Als Folge können unterschiedliche Einstellwinkel der Leitschaufeln um den Umfang der Leitschaufelanordnung auftreten. Dies wiederum führt zu einer nicht optimalen Wirkungsweise des Kompressors oder der Turbine.

Es wurde im Stand der Technik versucht, diese Effekte konstruktiv dadurch zu lösen, dass insbesondere die Leitschaufelverstellringe sowie deren Lagerung komplexer ausgebildet wurden oder die Anzahl der aktiven Betätigungsmechanismen erhöht wurde. Hieraus ergeben sich jedoch zusätzliche Kosten, zusätzliches Gewicht sowie ein größerer Platzbedarf.

Die US 3 458 118 A zeigt zwei Leitschaufelverstellringe, welche beide gemeinsam über einen hydraulischen Aktuator betätigt werden. Die beiden Leitschaufelverstellringe sind zur gemeinsamen gleichzeitigen Bewegung miteinander gekoppelt. Die Koppelung der beiden Leitschaufelverstellringe erfolgt über einen Bügel, der mit einem ersten Teil an dem ersten Leitschaufelverstellring und einem zweiten Teil an dem zweiten Leitschaufelverstellring befestigt ist.

Ferner zeigt die US 3 779 665 A eine Leitschaufelverstellvorrichtung mit zwei Leitschaufelverstellringen, welche mit jeweiligen Leitschaufeln gekoppelt sind und mit zumindest einer Betätigungseinrichtung in Umfangsrichtung drehbar sind. Die Betätigungsvorrichtung ist über Teleskoparme mit dem ersten Leitschaufelverstellring verbunden und über einen Teleskoparm und eine drehbare Stange mit dem zweiten Leitschaufelverstellring verbunden.

Der Erfindung liegt die Aufgabe zugrunde, eine Leitschaufelverstellvorrichtung für einen Kompressor oder eine Turbine einer Gasturbine der eingangs genannten Art zu schaffen, welche bei einfachem Aufbau und einfacher, kostengünstiger Herstellbarkeit die Nachteile des Standes der Technik vermeidet und eine präzise Verstellung der Leitschaufeln ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Betätigungsvorrichtung mittels einer ersten Übertragungsvorrichtung mit den Leitschaufelverstellringen gekoppelt ist und dass eine zweite Übertragungsvorrichtung vorgesehen ist, welche ebenfalls mit den Leitschaufelverstellringen gekoppelt ist. Diese zweite Übertragungsvorrichtung ist bevorzugt gegenüberliegend zu der ersten Übertragungsvorrichtung angeordnet.

Das Grundprinzip der Erfindung beruht somit darin, die erste Übertragungsvorrichtung, welche die Bewegung der Betätigungsvorrichtung mit den Leitschaufelverstellringen koppelt, durch eine zweite Übertragungsvorrichtung zu ergänzen, welche nicht mit einer Betätigungsvorrichtung gekoppelt ist, sondern passiv die beiden Leitschaufelverstellringe miteinander koppelt. Es ergibt sich somit durch die zweite Übertragungsvorrichtung ein passiver Mechanismus, welcher zu einer Zwangskopplung der beiden Leitschaufelverstellringe führt. Durch diese Zwangskoppelung wird eine gegenseitige Kontrolle einer Verdrehung der Leitschaufelverstellringe gewährleistet. Durch eine bevorzugt diametrale oder gegenüberliegende Anordnung der zweiten

Übertragungsvorrichtung zur ersten Übertragungsvorrichtung (bezogen auf eine zur Triebwerksachse radiale Ebene) werden die in Umfangsrichtung wirkenden Kräfte in die jeweiligen Leitschaufelverstellringe eingeleitet, so dass sich diese bei einer Betätigung der Betätigungsvorrichtung präzise zueinander und zu den Leitschaufeln verdrehen können.

Erfindungsgemäß sind die erste und die zweite Übertragungsvorrichtung bevorzugt als Kurbelwelle oder als Hebelgetriebe ausgebildet. Die Art und Ausgestaltung der Übertragungsvorrichtungen entspricht dabei den aus dem Stand der Technik bekannten Konstruktionen, so dass diese nicht oder nur geringfügig modifiziert werden müssen.

In besonders günstiger Weiterbildung der Erfindung ist vorgesehen, dass die erste Übertragungsvorrichtung und die zweite Übertragungsvorrichtung jeweils gleich und/oder mit gleicher Kinematik ausgebildet sind. Hierdurch ergibt sich eine besonders präzise Kopplung und gegenseitige Kontrolle der Bewegungen der beiden Leitschaufelverstellringe bei einer Verdrehung durch die Betätigungsvorrichtung.

Erfindungsgemäß ist es auch möglich, mehr als zwei Leitschaufelverstellringe, beispielsweise drei oder vier Leitschaufelverstellringe, jeweils über eine erste und eine zweite Übertragungsvorrichtung miteinander zu koppeln. Dabei können sich durch die Ausgestaltung der Übertragungsvorrichtungen bei einer Betätigung der Betätigungsvorrichtung unterschiedliche Verdrehwinkel der Leitschaufelverstellringe zur Verstellung der jeweiligen Leitschaufeln in unterschiedlichen Leitschaufelanordnungen des Kompressors oder der Turbine ergeben.

In Weiterbildung der Erfindung ist es auch möglich, am Umfang verteilt mehrere Betätigungsvorrichtungen sowie mehrere erste und zweite Übertragungsvorrichtungen anzuordnen. Dies kann sich insbesondere bei Kompressoren oder Turbinen mit großem Durchmesser als vorteilhaft erweisen, da die einzelnen Betätigungsvorrichtungen zur Aufbringung einer ausreichenden Verstellkraft kleiner dimensioniert werden können. Auch bei einer derartigen Anordnung ist erfindungsgemäß vorgesehen, dass symmetrisch versetzt z. B. 90° zu den ersten Übertragungsvorrichtungen jeweils zweite Übertragungsvorrichtungen angeordnet sind, welche passiv wirken und die einzelnen Leitschaufelverstellringe miteinander koppeln, so dass deren Bewegung und damit die Verstellung der Leitschaufelverstellringe präzise erfolgt.

Gemäß dem erfindungsgemäßen Grundprinzip bildet somit die erste Übertragungsvorrichtung eine aktive Übertragungsvorrichtung zur Einbringung der Verstellkraft der Betätigungsvorrichtung (master), während die zweite Übertragungsvorrichtung passiv wirkt (slave).

Im Folgenden wird die Erfindung anhand von Ausführungsbeispielen in Verbindung mit der Zeichnung beschrieben. Dabei zeigt:
- Fig. 1: zeigt eine schematische Darstellung eines Gasturbinentriebwerks gemäß der vorliegenden Erfindung;
- Fig. 2: eine perspektivische Teilansicht eines Kompressors mit verstellbaren Leitschaufeln und Leitschaufelverstellringen;
- Fig. 3: eine Radialschnittansicht eines ersten Ausführungsbeispiels der Erfindung;
- Fig. 4: eine Detailansicht eines Ausführungsbeispiels, analog Fig. 3, mit einer Übertragungsvorrichtung in Form einer Kurbelwelle; und
- Fig. 5, 6: weitere Ausführungsbeispiele der Übertragungsvorrichtungen in Form von Hebelgetrieben.

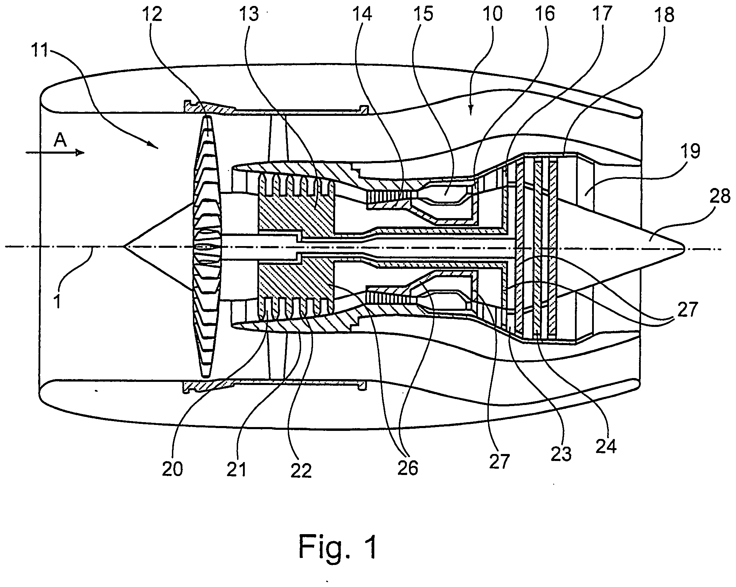

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, Brennkammern 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Die Erfindung wird nachfolgend anhand eines Kompressors beschrieben, sie ist jedoch auch für Leitschaufeln einer Turbine anwendbar.

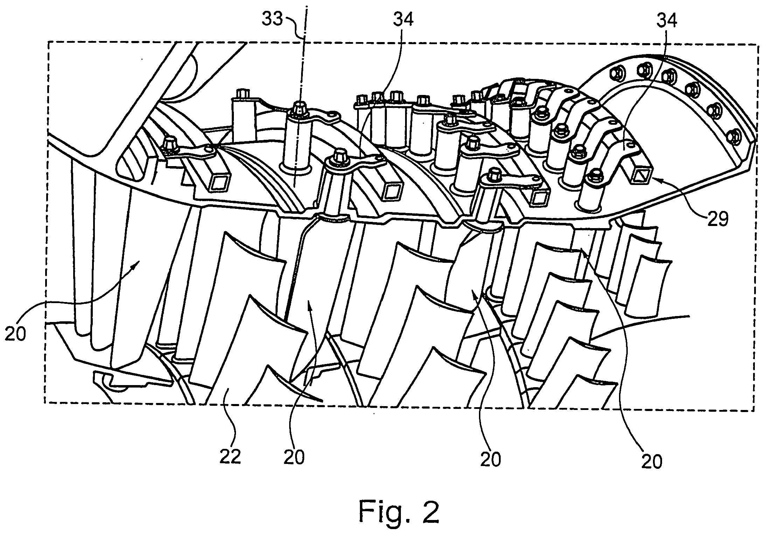

Die Fig. 2 zeigt eine perspektivische Teilansicht eines Kompressors mit mehreren Reihen von verstellbaren Leitschaufeln 20, zwischen denen jeweils Kompressorlaufschaufeln 22 angeordnet sind. Die einzelnen Leitschaufeln 20 sind jeweils um eine radiale Achse 33 verschwenkbar. Sie sind mit einem Hebel 34 verbunden, welcher an seinem gegenüberliegenden Endbereich mit einem Leitschaufelverstellring 29 drehbar gekoppelt ist. Durch eine Verdrehung des Leitschaufelverstellrings 29 in Umfangsrichtung erfolgt eine Verschwenkung der einzelnen Hebel 34. Hierdurch wird eine Verdrehung der Leitschaufeln 20 um die jeweilige Achse 33 bewirkt.

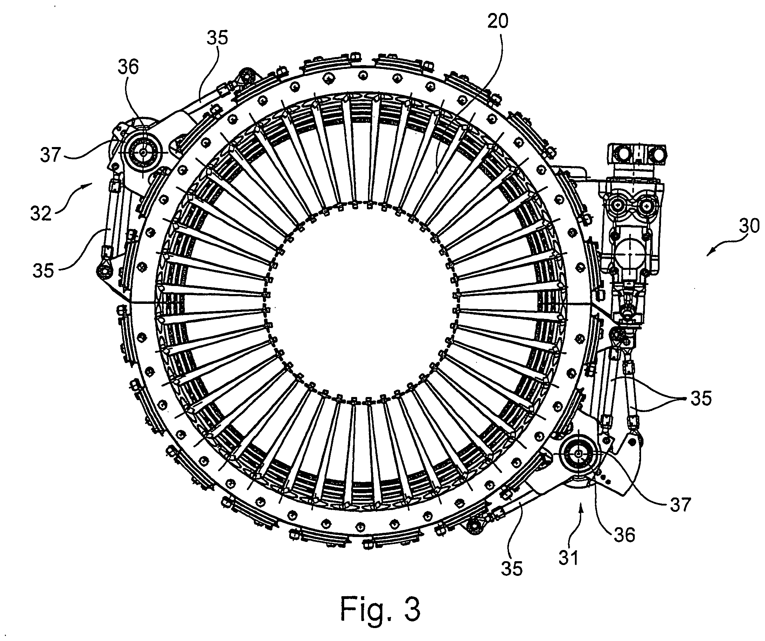

Die Fig. 3 zeigt eine Ansicht in einer Radialschnittebene. In der schematischen Darstellung der Fig. 3 sind eine Vielzahl von Leitschaufeln 20 gezeigt. Diese sind, wie in Fig. 2 dargestellt, mittels der in Fig. 3 nicht sichtbaren Hebel 34 mit dem ebenfalls nicht dargestellten Leitschaufelverstellring 29 gekoppelt.

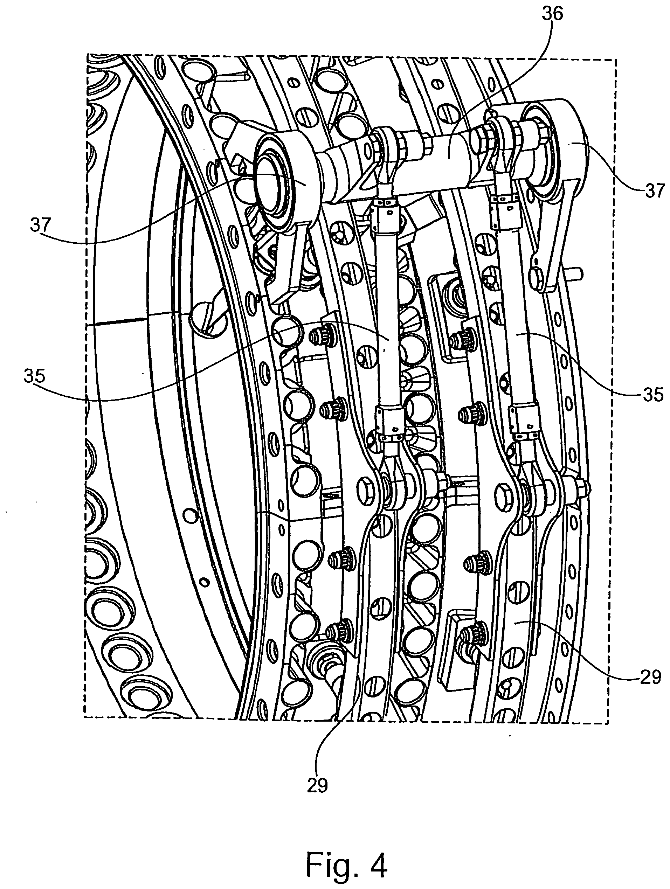

Die Fig. 3 zeigt weiterhin eine Betätigungsvorrichtung 30, welche beispielsweise als Kolben-Zylinder-Einheit ausgebildet ist. Die Betätigungsvorrichtung 30 ist über jeweils eine Koppelstange 35 mit einer Kurbelwelle 36 gekoppelt, so wie dies in Fig. 4 dargestellt ist. Die Kurbelwelle 36 ist mittels Lagern 37 gelagert. Die Kurbelwelle 36 ist weiterhin mittels Koppelstangen 35 mit den Leitschaufelverstellringen 29 gekoppelt. Eine Betätigung der Betätigungsvorrichtung 30 führt somit zu einer Verdrehung oder Verschwenkung der Kurbelwelle 36, welche wiederum zu einer Verdrehung des jeweiligen Leitschaufelverstellrings 29 führt, da die Kurbelwelle 36 über eine Koppelstange 35 mit dem Leitschaufelverstellring 29 verbunden ist.

Die in Fig. 3 in der rechten Bildhälfte dargestellte Anordnung bildet somit eine erste Übertragungsvorrichtung 31, welche aktiv wirksam ist, da sie durch die Betätigungsvorrichtung 30 betätigbar ist. Diametral gegenüberliegend zu der ersten Übertragungsvorrichtung 31 ist eine zweite Übertragungsvorrichtung 32 vorgesehen, welche identisch zu der ersten Übertragungsvorrichtung 31 aufgebaut ist. Somit umfasst die zweite Übertragungsvorrichtung 32 ebenfalls Koppelstangen 35 sowie eine Kurbelwelle 36. Die zweite Übertragungsvorrichtung 32 wirkt somit passiv und koppelt die beiden Leitschaufelverstellringe 29. Die beiden Übertragungsvorrichtungen 31 und 32 weisen, da sie gleich ausgebildet sind, dieselbe Kinematik auf. Hierdurch ergibt sich die oben stehend beschrieben Zwangskopplung der beiden Leitschaufelverstellringe 29, welche wiederum zu einer gegenseitigen Kontrolle der Bewegung der Leitschaufelverstellringe und infolge zu einer präzisen Verschwenkung der Leitschaufeln 20 führt.

Durch die erfindungsgemäß vorgesehene Kopplung und gegenseitige Kontrolle der beiden Leitschaufelverstellringe 29 ergibt sich ein hohes Maß an Genauigkeit bei der Verstellung der Leitschaufeln, so dass sämtliche Leitschaufeln eines Leitschaufelrings in nahezu gleicher Weise um fast dieselben Winkelbeträge verstellbar sind.

Durch die erfindungsgemäß vorgesehene Zwangskopplung der beiden Leitschaufelverstellringe ist es möglich, diese mittels nur einer Betätigungsvorrichtung 30 präzise zu verstellen. Die zweite Übertragungsvorrichtung 32 ist dabei kostengünstig bei geringem Gewicht und geringem Raumbedarf realisierbar.

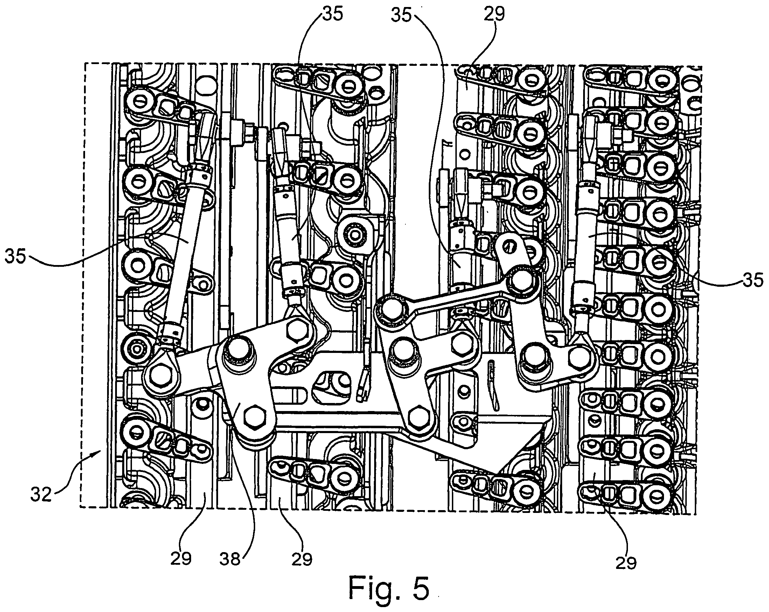

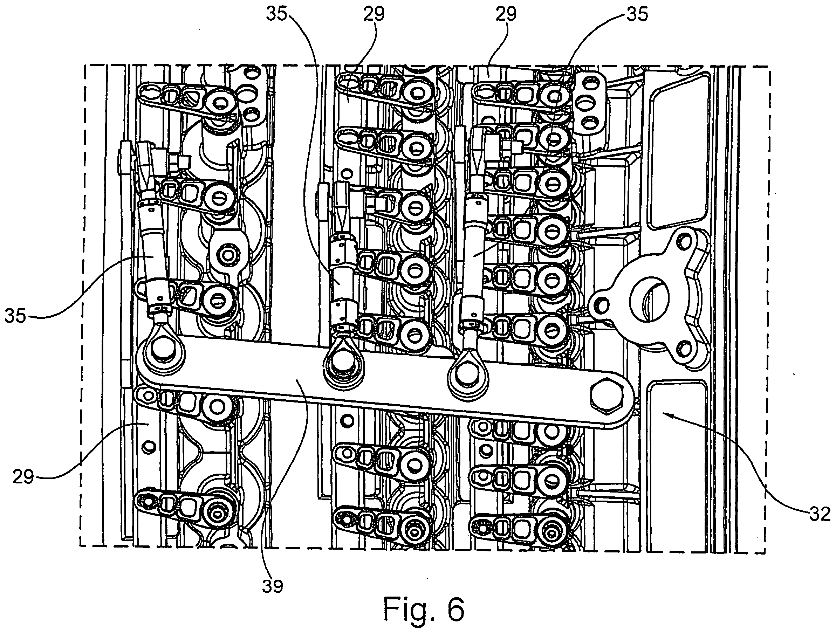

Die Fig. 5 und 6 zeigen zwei weitere Ausführungsbeispiele der erfindungsgemäßen Übertragungsvorrichtung 31 bzw. 32. Dabei zeigt die Fig. 5 eine Anordnung mit vier Leitschaufelverstellringen 29, welche mittels einer zweiten Übertragungsvorrichtung 32 miteinander gekoppelt sind. Die Fig. 5 und 6 zeigen jeweils lediglich die zweite Übertragungsvorrichtung 32. Diese ist, wie erwähnt, diametral zu einer nicht dargestellten ersten Übertragungsvorrichtung 31 angeordnet, welche gleich der zweiten Übertragungsvorrichtung 32 ausgebildet ist. Die Fig. 5 zeigt dabei ein Hebelgetriebe 38 mit mehreren Hebeln, welche jeweils über Koppelstangen 35 mit dem jeweiligen Leitschaufelverstellring 29 verbunden sind.

Die Fig. 6 zeigt ein weiteres Ausführungsbeispiel mit einem Hebel 39, welcher mittels der Koppelstangen 35 mit den in Fig. 6 gezeigten drei Leitschaufelverstellringen 29 gekoppelt ist.

### Bezugszeichenliste:

- 1: Triebwerksachse
- 10: Gasturbinentriebwerk
- 11: Lufteinlass
- 12: im Gehäuse umlaufender Fan
- 13: Mitteldruckkompressor
- 14: Hochdruckkompressor
- 15: Brennkammern
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslaufkonus
- 29: Leitschaufelverstellring
- 30: Betätigungsvorrichtung
- 31: Erste Übertragungsvorrichtung (aktiv)
- 32: Zweite Übertragungsvorrichtung (passiv)
- 33: Achse
- 34: Hebel
- 35: Koppelstange
- 36: Kurbelwelle
- 37: Lager
- 38: Hebelgetriebe
- 39: Hebel

## Patentansprüche

1. Leitschaufelverstellvorrichtung einer Gasturbine mit einer Vielzahl von jeweils um eine radiale Achse (33) schwenkbaren Leitschaufeln (20), welche in zumindest zwei Radialebenen angeordnet sind, sowie mit zumindest zwei Leitschaufelverstellringen (29), welche mit den jeweiligen Leitschaufeln (20) gekoppelt sind und mittels zumindest einer Betätigungsvorrichtung (30) in Umfangsrichtung drehbar sind, wobei die Betätigungsvorrichtung (30) mittels einer ersten Übertragungsvorrichtung (31) mit den Leitschaufelverstellringen (29) gekoppelt ist, **dadurch gekennzeichnet, dass** der ersten Übertragungsvorrichtung (31) im Wesentlichen gegenüberliegend eine zweite Übertragungsvorrichtung (32) angeordnet ist, **dadurch gekennzeichnet, dass** die zweite Übertragungsvorrichtung (32) beide Leitschaufelverstellringe (29) miteinander koppelt.

2. Vorrichtung nach Anspruch 1, **dadurch gekennzeichnet, dass** die Übertragungsvorrichtung (31, 32) als Kurbelwelle (36) oder als Hebelgetriebe (38, 39) ausgebildet ist.

3. Vorrichtung nach Anspruch 1 oder 2, **dadurch gekennzeichnet, dass** die erste (31) und die zweite (32) Übertragungsvorrichtung jeweils gleich und/oder mit gleicher Kinematik ausgebildet sind.

4. Vorrichtung nach einem der Ansprüche 1 bis 3, **dadurch gekennzeichnet, dass** die Betätigungsvorrichtung (30) als Kolben-Zylinder-Einheit ausgebildet ist.

5. Vorrichtung nach einem der Ansprüche 1 bis 4, **dadurch gekennzeichnet, dass** die zumindest zwei Leitschaufelverstellringe (29) mittels der ersten (31) und der zweiten (32) Übertragungsvorrichtung zwangsgekoppelt miteinander verbunden sind.

6. Vorrichtung nach einem der Ansprüche 1 bis 5, **dadurch gekennzeichnet, dass** mehrere Reihen von Leitschaufeln (20) und mehrere Leitschaufelverstellringe (29) vorgesehen sind, welche gemeinsam mittels der Betätigungsvorrichtung (30) verstellbar sind.

7. Vorrichtung nach einem der Ansprüche 1 bis 6, **dadurch gekennzeichnet, dass** am Umfang verteilt mehrere Betätigungsvorrichtungen (30) und mehrere erste (31) und zweite (32) Übertragungsvorrichtungen angeordnet sind.

8. Vorrichtung nach einem der Ansprüche 1 bis 7, **dadurch gekennzeichnet, dass** die zweite Übertragungsvorrichtung (32) der ersten Übertragungsvorrichtung (31) diametral gegenüberliegend angeordnet ist.

## Claims

1. Stator vane adjusting device of a gas turbine having a plurality of stator vanes (20) each swivellable about a radial axis (33) and arranged in at least two radial planes, as well as at least two stator vane adjusting rings (29) coupled to the respective stator vanes (20) and rotatable in the circumferential direction by at least one actuating device (30), wherein the actuating device (30) is coupled to the stator vane adjusting rings (29) by means of a first transmission device (31), **characterized in that** a second transmission device (32) is arranged essentially opposite to the first transmission device (31), **characterized in that** the second transmission device (32) couples the two stator vane adjusting rings (29) to each other.

2. Device in accordance with Claim 1, **characterized in that** the transmission device (31, 32) is designed as a crankshaft (36) or as a lever gear (38, 39).

3. Device in accordance with Claim 1 or 2, **characterized in that** the first (31) and the second (32) transmission device are in each case designed identical and/ or with the same kinematic effect.

4. Device in accordance with one of the Claims 1 to 3, **characterized in that** the actuating device (30) is designed as a piston-cylinder unit.

5. Device in accordance with one of the Claims 1 to 4, **characterized in that** a forced coupling of the at least two stator vane adjusting rings (29) is provided by means of the first (31) and the second (32) transmission device.

6. Device in accordance with one of the Claims 1 to 5, **characterized in that** several rows of stator vanes (20) and several stator vane adjusting rings (29) are provided, which are jointly adjustable by means of the actuating device (30).

7. Device in accordance with one of the Claims 1 to 6, **characterized in that** several actuating devices (30) and several first (31) and second (32) transmission devices are spread over the circumference.

8. Device in accordance with one of the Claims 1 to 7, **characterized in that** the second transmission device (32) is arranged diametrically opposite to the first transmission device (31).

## Revendications

1. Dispositif d'ajustage d'aubes directrices d'une turbine à gaz avec une multitude d'aubes directrices (20) pouvant pivoter chacune autour d'un axe radial (33), lesquelles aubes directrices sont disposées dans au moins deux niveaux radiaux, et avec au moins deux bagues d'ajustage d'aubes directrices (29) qui sont couplées aux aubes directrices (20) respectives et qui peuvent être tournées dans le sens circonférentiel au moyen d'au moins un dispositif d'actionnement (30), sachant que le dispositif d'actionnement (30) est couplé aux bagues d'ajustage d'aubes directrices (29) au moyen d'un premier dispositif de transmission (31), **caractérisé en ce qu'**un second dispositif de transmission (32) est disposé essentiellement à l'opposé du premier dispositif de transmission (31), **caractérisé en ce que** le second dispositif de transmission (32) accouple les deux bagues d'ajustage d'aubes directrices (29) l'une à l'autre.

2. Dispositif selon la revendication n° 1, **caractérisé en ce que** le dispositif de transmission (31, 32) est conçu sous forme de vilebrequin (36) ou de mécanisme à levier (38, 39).

3. Dispositif selon la revendication n° 1 ou n° 2, **caractérisé en ce que** le premier (31) et le second (32) dispositif de transmission sont conçus à l'identique et/ ou avec la même cinématique.

4. Dispositif selon une des revendications n° 1 à n° 3, **caractérisé en ce que** le dispositif d'actionnement (30) est conçu sous forme d'unité piston-cylindre.

5. Dispositif selon une des revendications n° 1 à n° 4, **caractérisé en ce que** lesdites au moins deux bagues d'ajustage d'aubes directrices (29) sont reliées ensemble au moyen du premier (31) et du second (32) dispositif de transmission par couplage forcé.

6. Dispositif selon une des revendications n° 1 à n° 5, **caractérisé en ce que** sont prévues plusieurs rangées d'aubes directrices (20) et plusieurs bagues d'ajustage d'aubes directrices (29) qui sont réglables ensemble au moyen du dispositif d'actionnement (30).

7. Dispositif selon une des revendications n° 1 à n° 6, **caractérisé en ce que** plusieurs dispositifs d'actionnement (30) et plusieurs premiers (31) et seconds (32) dispositifs de transmission sont répartis sur la circonférence.

8. Dispositif selon une des revendications n° 1 à n° 7, **caractérisé en ce que** le second dispositif de transmission (32) est disposé diamétralement opposé au premier dispositif de transmission (31).
